# EUROPÄISCHE PATENTSCHRIFT

(11) **EP 1 935 544 B1**
(45) Veröffentlichungstag und Bekanntmachung des Hinweises auf die Patenterteilung: **29.06.2011**
(21) Anmeldenummer: 07023203.8
(22) Anmeldetag: 30.11.2007
(51) Int. Cl.: B23D 47/00, B23D 47/02, B27B 5/065, B23Q 1/01

(54) **Sägemaschine für plattenförmige Werkstücke**
Cutting machine for plate-shaped workpieces
Machine de sciage de pièces en forme de panneaux

(30) Priorität: 22.12.2006 DE 202006019323 U
(43) Veröffentlichungstag der Anmeldung: 25.06.2008
(73) Patentinhaber: HOLZMA Plattenaufteiltechnik GmbH, 75365 Calw-Holzbronn (DE)
(72) Erfinder: Blaich, Markus, 75365 Calw-Stammheim (DE)
(74) Vertreter: Dreiss

(56) Entgegenhaltungen:
- EP-A- 0 816 012
- EP-A2- 2 149 416
- WO-A-00/38882
- WO-A1-2006/024058
- DE-A1- 10 163 471
- DE-A1- 10 211 682
- DE-A1- 19 905 002
- DE-B3-102006 017 060
- DE-C1- 3 609 331
- DE-C1- 4 230 502
- DE-U1- 9 318 366

## Beschreibung

Die Erfindung betrifft eine Aufteilanlage nach dem Oberbegriff des Anspruchs 1. Eine solche Aufteilanlage ist aus DE 101 63471 A1 bekannt.

Die DE 10 2005 002 595 A1 beschreibt eine Aufteilanlage für plattenförmige Werkstücke, mit einem Zuführtisch und einer quer zu einer Zuführrichtung verfahrbaren Aufteilsäge. Die DE 101 63 471 A1 beschreibt, dass eine Aufteilsäge an einem sich quer zu einer Zuführrichtung erstreckenden Maschinentisch, welcher insoweit eine Trageinrichtung bildet, gehalten ist.

Aufgabe der vorliegenden Erfindung ist es, eine Aufteilanlage für plattenförmige Werkstücke zu schaffen, die mit hoher Präzision, hohen Taktraten und langen Standzeiten arbeitet.

Diese Aufgabe wird durch eine Aufteilanlage für plattenförmige Werkstücke mit den Merkmalen des Anspruchs 1 gelöst. Vorteilhafte Weiterbildungen sind in Unteransprüchen genannt.

Mineralguss ist ein Werkstoff, der aus mineralischen Füllstoffen, wie Quarzkies, Quarzsand und Gesteinsmehl, und einem geringen Anteil Epoxidbinder besteht. Indem bei der erfindungsgemäßen Aufteilanlage die Trageinrichtung mindestens bereichsweise aus Mineralguss hergestellt ist, weist diese Trageinrichtung eine sehr gute Dämpfung von Schwingungen bei großer Steifigkeit auf. Auch werden Eigenschwingungen reduziert und Eigenfrequenzen in unkritische Bereiche verschoben. Hierdurch wird die Schnittpräzision der Aufteilsäge verbessert, und es können höhere Taktraten aufgrund höherer Zuführgeschwindigkeiten realisiert werden, ohne dass die Schnittpräzision negativ beeinflusst wird. Aufgrund der besseren Schwingungsdämpfung werden auch bessere Standzeiten des Werkzeugs, also der Säge, erreicht, was wiederum den Betriebskosten zugute kommt.

Erfindungsgemäß ist zudem, dass in mindestens einem mit Mineralguss hergestellten Bereich ein Kanal für ein Fluid oder eine elektrische Leitung eingegossen ist. Damit entfallen außen liegende Leitungsführungen, die im Betrieb beschädigt werden können. Die Robustheit der Anlage wird auf diese Weise deutlich verbessert. Außerdem ist eine schnelle und gewissermaßen komfortable Montage ohne Halter etc. möglich. Die Verwendung von Mineralguss für die Herstellung der Trageinrichtung führt ferner auch zu einer günstigeren Ökobilanz, da bei der Herstellung der Trageinrichtung weniger Energie erforderlich ist. Schließlich wird auch die Geräuschabstrahlung durch einen verringerten Körperschall geringer. Erfindungsgemäß ist außerdem, dass die Ständerwand, der Verbindungsabschnitt und der Führungsabschnitt das einstückige Mineralgussteil bilden. Durch die solchermaßen hergestellte Einstückigkeit wird eine sehr steife Konstruktion realisiert, die wiederum zur Schwingungsdämpfung mit den ganzen damit verbundenen Vorteilen beiträgt. Schließlich kann durch die gewählte Konstruktion bestehend aus Ständerwand, Verbindungsabschnitt und Führungsabschnitt ein platzsparender Aufbau realisiert werden, so dass nur eine kleine Standfläche für die Trageinrichtung benötigt wird.

Dabei kann die vertikale Ständerwand eine Mehrzahl vertikaler Versteifungselemente umfassen, mit dazwischen liegenden vergleichsweise dünnen Wandabschnitten. Der Vorteil dieser Konstruktion liegt gegenüber einer gleichmäßig dicken Konstruktion vor allem in der erzielbaren Gewichtsreduzierung, die die Handhabung bei der Montage der Aufteilanlage erleichtert.

Ferner wird vorgeschlagen, dass die Trageinrichtung zwei seitliche Stützen aufweist, die mit der Ständerwand, dem Verbindungsabschnitt und dem Führungsabschnitt ein einstückiges Mineralgussteil bilden. Die seitlichen Stützen erleichtern das Anflanschen von Zusatzeinrichtungen, beispielsweise einem Bedienpult, einem Monitor, etc., ohne das die für die Halterung der Aufteilsäge erforderlichen Elemente hierdurch beeinflusst werden.

Die Stützen können einen Auslegerabschnitt aufweisen, mit dem der Führungsabschnitt gestützt wird. Dies führt zu einer nochmals verbesserten Steifigkeit.

In einer zusätzlichen Weiterbildung der erfindungsgemäßen Aufteilungsanlage wird vorgeschlagen, dass in mindestens einen mit Mineralguss hergestellten Bereich ein Druckkessel für ein Druckfluid eingegossen ist. Die Trageinrichtung erfüllt dann eine Doppelfunktion, indem sie gleichzeitig ein Druckfluidreservoir, beispielsweise für Druckluft, aufweist, welches geschützt und sicher im Inneren der Trageinrichtung angeordnet ist. Auch dies kommt der Betriebssicherheit zugute und vereinfacht die Montage der Aufteilanlage, was letztlich den Kosten zugute kommt. Ferner können Verbrauchsspitzen im Pressluftnetz reduziert werden, der Druckkessel hat also eine Pufferfunktion.

Der besagte Kanal kann auf einfache Art und Weise durch ein Rohrelement gebildet werden, welches von Mineralguss umgeben, also in diesen eingegossen ist. Es wird also einfach beim Herstellen des Mineralgussteils in die entsprechende Form das besagte Rohr eingelegt und anschließend vergossen. Auf diese Weise ist auch eine einfache Reparatur oder auch eine Anpassung der Aufteilanlage möglich, da beispielsweise eine elektrische Leitung auch nachträglich in diesem Rohr verlegt oder eine schadhafte Leitung ausgetauscht werden kann.

In die gleiche Richtung zielt jene vorteilhafte Ausgestaltung der erfindungsgemäßen Aufteilanlage, bei welcher ein zentraler Druckluftanschluss vorgesehen ist, der mit im Mineralguss angeordneten Kanälen und Verteilern verbunden ist.

Für eine präzise Positionierung insbesondere des Sägewagens ist es vorteilhaft, wenn in mindestens einem mit Mineralguss hergestellten Bereich ein nach Herstellung des Mineralgussbereichs spanend bearbeitetes Metallteil eingegossen ist. In ein solches Metallteil können dann beispielsweise Gewinde eingeschnitten werden und es können die Oberflächen so plan geschliffen oder gefräst werden, dass eine exakte Positionierung beispielsweise des Sägewagens oder von Zusatzelementen möglich ist.

Dabei kann, um auch hohe Kräfte aufnehmen zu können, das Metallteil mittels mindestens eines Ankerelements im Mineralgussbereich verankert sein. Verwendet werden können hier Schwerlastanker ebenso wie einfache Schrauben.

Ganz konkret wird vorgeschlagen, dass in den Führungsabschnitt mindestens eine obere und mindestens eine untere Führungsplatte eingegossen sind, die seitlich vom Führungsabschnitt abragen und jeweils eine prismatische, sich quer zur Zuführrichtung erstreckende Ausnehmung aufweisen, in denen jeweils ein Führungselement für den Sägewagen angeordnet ist. Die beiden gegenüberliegenden Führungselemente bilden somit jene Führungsschienen, zwischen denen der Sägewagen verfahrbar gehalten ist. Durch die vorgeschlagene Konstruktion können sie sehr präzise positioniert werden.

Ferner kann das Metallteil eine Nut zum Einhängen eines Luftkissentisches aufweisen. Auch dies hilft, eine insgesamt mit hoher Präzision und geringen Fertigungstoleranzen hergestellte Aufteilanlage zu schaffen.

Nachfolgend wird ein besonders bevorzugtes Ausführungsbeispiel einer Aufteilanlage unter Bezugnahme auf die beiliegende Zeichnung näher erläutert. In der Zeichnung zeigen:
- Figur 1: eine perspektivische Darstellung einer Aufteilanlage mit einer Trageinrichtung und einem Sägewagen;
- Figur 2: eine vergrößerte perspektivische Darstellung eines Bereichs der Aufteilanlage von Figur 1, mit der Trageinrichtung und dem Sägewagen;
- Figur 3: eine nochmals vergrößerte perspektivische Darstellung eines Teils der Trageinrichtung von Figur 2;
- Figur 4: eine Seitenansicht eines Bereichs von Figur 1;
- Figur 5: eine perspektivische Darstellung von schräg vorne und oben der Trageinrichtung von Figur 1;
- Figur 6: eine perspektivische Darstellung von schräg vorne und unten der Trageinrichtung von Figur 1;
- Figur 7: eine perspektivische Darstellung von schräg hinten und oben der Trageinrichtung von Figur 1;
- Figur 8: eine Ansicht von vorne der Trageinrichtung von Figur 1; und
- Figur 9: ein Schnitt längs der Linie IX-IX von Figur 8.

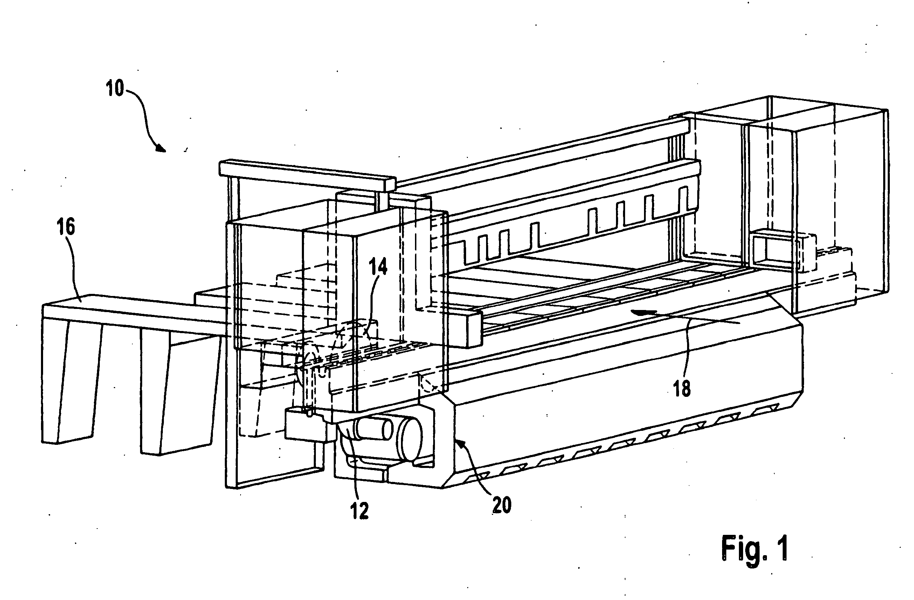

In Figur 1 trägt eine Aufteilanlage für plattenförmige Werkstücke insgesamt das Bezugszeichen 10. Sie umfasst eine an einem Sägewagen 12 angeordnete Aufteilsäge 14 und einen Entnahmetisch 16, von dem die aufgeteilten plattenförmigen Werkstücke (in den Figuren nicht gezeigt) entnommen werden können. Ferner gehört zu der Aufteilanlage 10 eine sich quer zu einer Zuführrichtung (Pfeil 18 in Figur 1) erstreckende Trageinrichtung 20, an der eine weiter unten noch genauer beschrieben Führung für den Sägewagen 12 angeordnet ist. Wie ebenfalls weiter unten noch genauer ausgeführt werden wird, ist die Trageinrichtung 20 im Wesentlichen aus Mineralguss hergestellt. Die Trageinrichtung 20 wird gemeinhin auch als "Maschinenträger" bezeichnet.

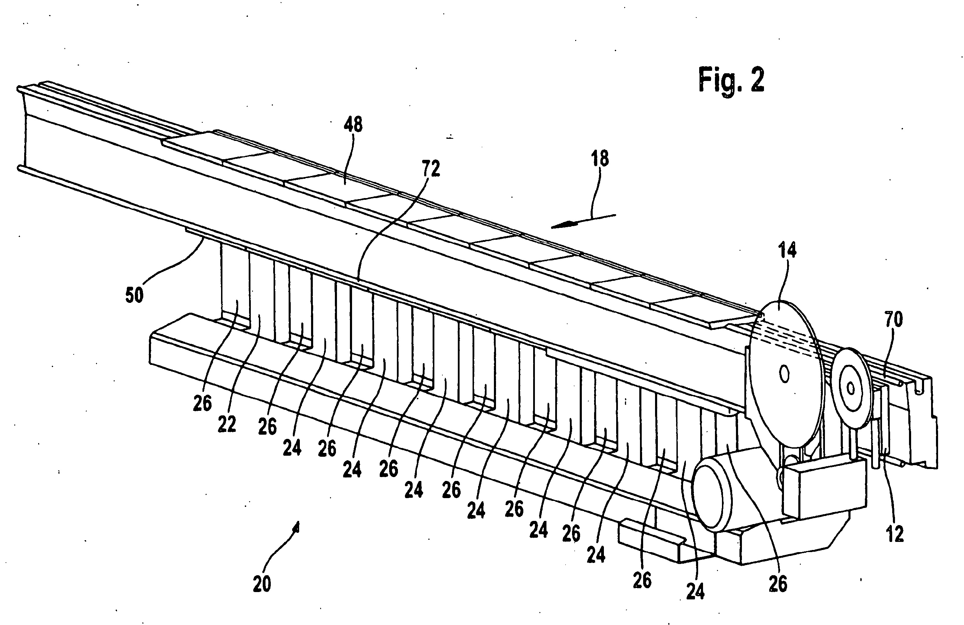

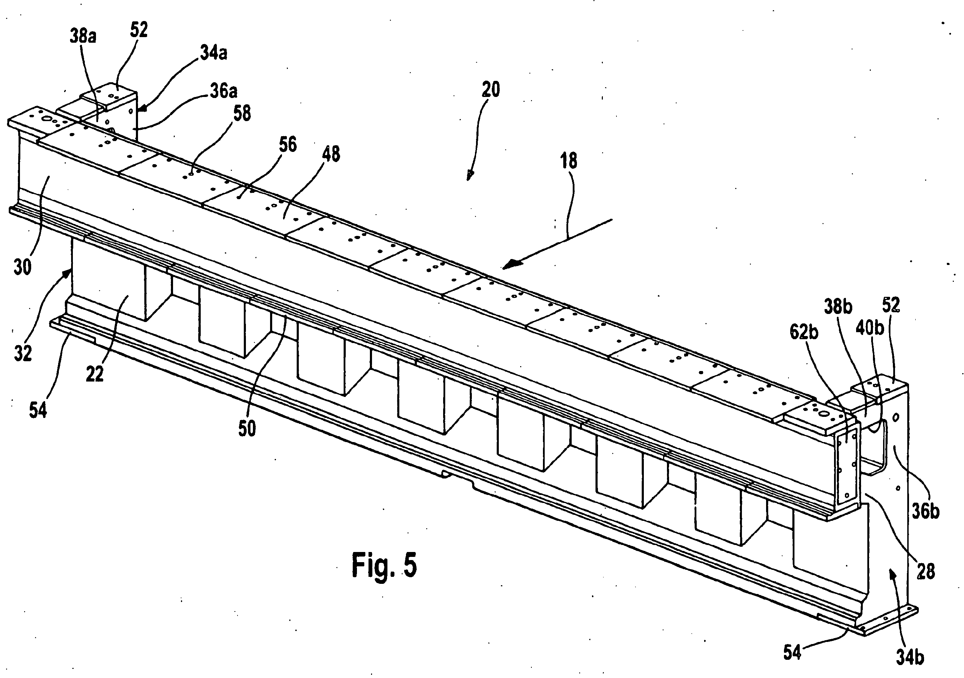

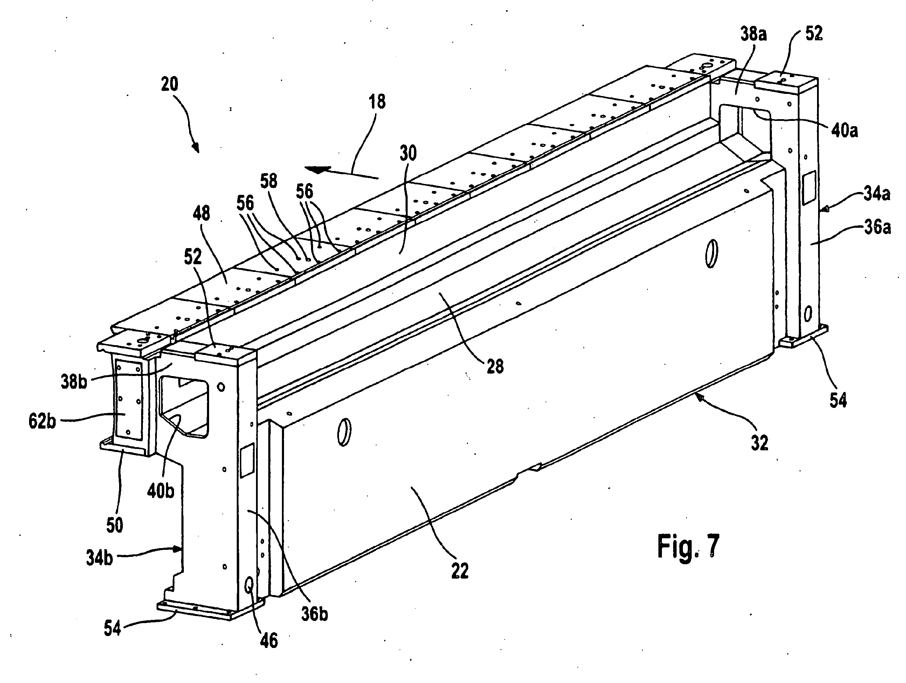

Wie insbesondere aus den Figuren 2 - 9 ersichtlich ist, umfasst die Trageinrichtung 20 eine Ständerwand 22, die sich quer zur Zuführrichtung 18 im Wesentlichen vertikal nach oben erstreckt. Die Ständerwand 22 weist dabei eine Mehrzahl von nebeneinander angeordneten vertikalen Versteifungselementen 24 auf, zwischen denen vergleichsweise dünne Wandabschnitte 26 angeordnet sind. Von einem oberen Randbereich der Ständerwand 22 kragt in Zuführrichtung ein Verbindungsabschnitt 28 mit einem mittleren Winkel gegenüber der Horizontalen von ungefähr 20° ab. Das abragende Ende des Verbindungsabschnitts 28 ist mit einem sich wiederum insgesamt im Wesentlichen vertikal erstreckenden Führungsabschnitt 30 verbunden. Die Ständerwand 22, der Verbindungsabschnitt 28 und der Führungsabschnitt 30 sind als insgesamt einstückiges Mineralgussteil 32 hergestellt. Dieses stellt also einen Mineralgussbereich der Trageinrichtung 20 dar. Bevorzugt wird dabei ein stark granithaltiger Mineralanteil und ein Matrixanteil von ungefähr 10 - 15 %.

Zu dem einstückigen Mineralgussteil 32 gehören auch zwei stirnseitig zu Ständerwand 22, Verbindungsabschnitt 28 und Führungsabschnitt 30 angeordnete, im Wesentlichen vertikale Stützen 34a und 34b. Diese dienen beispielsweise zur Anbindung von Zusatzeinrichtungen, wie beispielsweise einem Bedienterminal et cetera und zur zusätzlichen Versteifung. Hierzu weisen die beiden Stützen 34a und 34b einen vertikalen Stützabschnitt 36a beziehungsweise 36b und einen an dessen oberes Ende angeformten horizontalen Auslegerabschnitt 38a beziehungsweise 38b auf. Dieser erstreckt sich bis zum oberen Rand des Führungsabschnitts 30, wo er an diesen angeformt ist. Eine zwischen dem Auslegerabschnitt 38a beziehungsweise 38b und dem Verbindungsabschnitt 28 gebildete Öffnung 40a beziehungsweise 40b kann zur Durchführung beispielsweise von Kabeln verwendet werden.

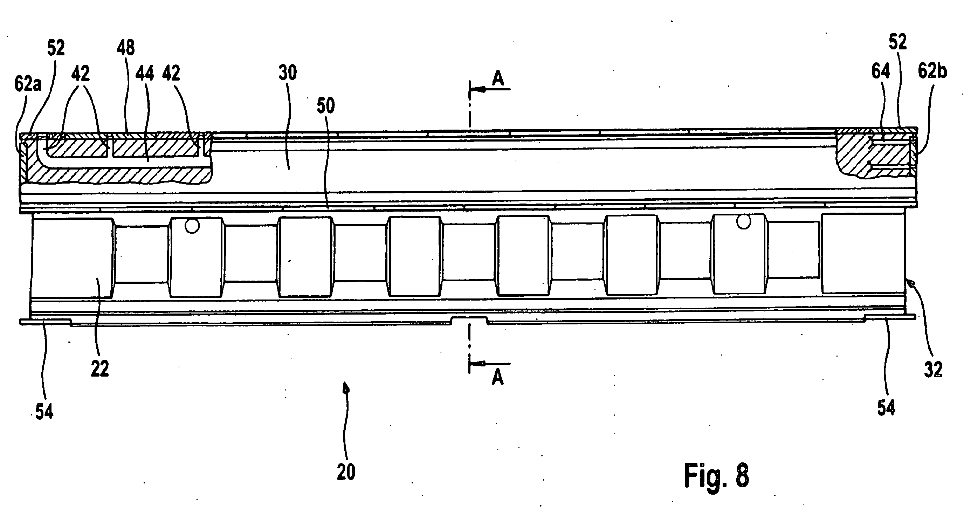

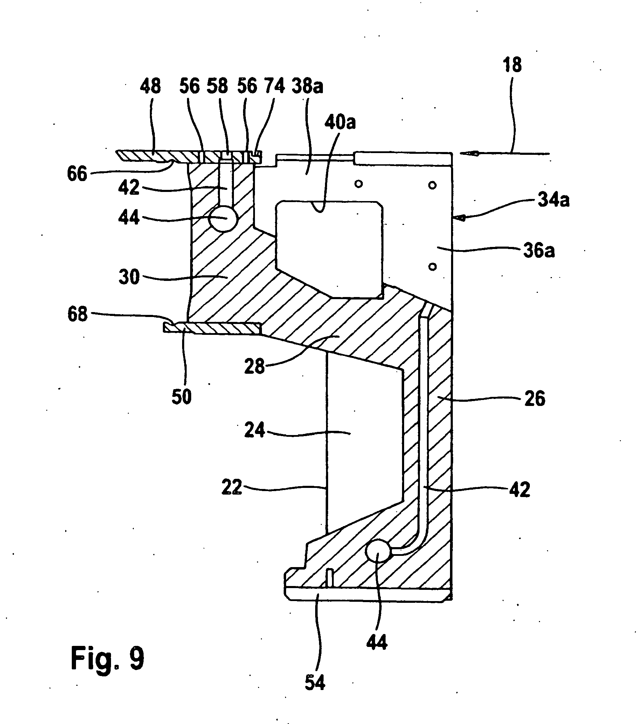

Wie insbesondere aus den Figuren 8 und 9 ersichtlich ist, sind in das einstückige Mineralgussteil 32 Druckluftkanäle 42 eingegossen. Hierzu werden beim Herstellen des Mineralgussteils 32 in die Form entsprechende Rohrelemente (nicht dargestellt) eingelegt, welche dann vom eigentlichen Mineralguss umgeben werden. Die Druckluftkanäle 42 werden über zwei ebenfalls in das Mineralgussteil 32 eingegossene Druckkessel 44 versorgt, die jeweils mit einem zentralen Druckluftanschluss 46 in der Stütze 34b verbunden sind. Ebenso sind in das Mineralgussteil 32 Rohrkanäle eingegossen, in denen elektrische Leitungen verlegt sind. Diese Kanäle sind jedoch aus Darstellungsgründen in der Zeichnung nicht gezeigt. Ebenfalls nicht gezeigt, jedoch vorhanden sind in das Mineralgussteil 32 eingegossene Kanäle für eine Kühlmittel- und eine Wasserversorgung bestimmter Bereiche beziehungsweise für Teile, welche zu der Aufteilanlage 10 gehören.

In das Mineralgussteil 32 sind verschiedene Metallplatten 48, 50, 52 und 54 eingegossen, die nach dem Aushärten des Verbundes aus Mineralgussteil 32 und den Platten 48 bis 54 spanend bearbeitet werden, beispielsweise an der Oberfläche gefräst, geschliffen und mit Löchern versehen werden.

Bei den Metallplatten 48 handelt es sich um obere Führungsplatten, die an der Oberseite des Führungsabschnitts 30 horizontal angegossen sind und in Zuführrichtung 18 vom Führungsabschnitt 30 horizontal abragen. Die oberen Führungsplatten 48 sind jeweils mit sechs Bohrungen 56 versehen (die jeweils äußeren beiden oberen Führungsplatten 48 allerdings nur mit 4), in die Ankerelemente (nicht sichtbar) eingeführt sind, welche die oberen Führungsplatten 48 im einstückigen Mineralgussteil 32 verankern. Ferner verfügen die oberen Führungsplatten 48 jeweils über eine Druckluftöffnung 58, in die ein Druckluftkanal 42 mündet (vergleiche Figuren 8 und 9).

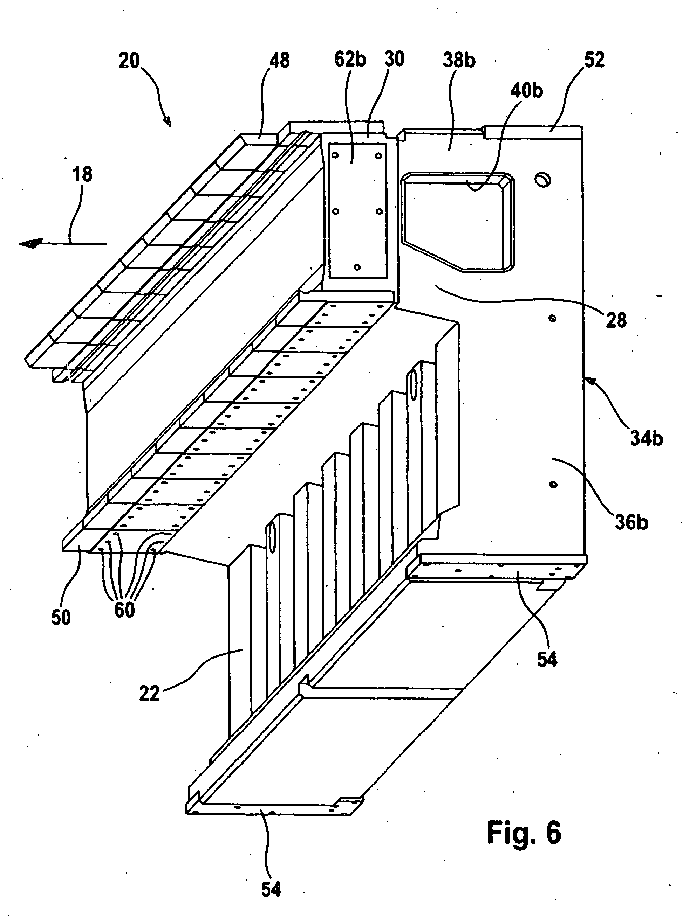

Bei den Platten 50 handelt es sich um untere Führungsplatten, welche an der Unterseite des Führungsabschnitts 30 an diesen angegossen sind und die ebenfalls in Zuführrichtung 18 vom Führungsabschnitt 30 horizontal abragen. Die unteren Führungsplatten 50 sind ebenfalls jeweils mit sechs Bohrungen 60 (vergleiche Figur 6) versehen, in die ebenfalls Ankerschrauben (nicht sichtbar) eingesetzt sind, die im Führungsabschnitt 30 des einstückigen Mineralgussteils 32 verankert sind und so für einen sicheren Halt der unteren Führungsplatten 50 sorgen. Gleiches gilt für stirnseitig am Führungsabschnitt 30 vorhandene Deckelplatten 62a und 62b, die über entsprechende Lastanker 64 im einstückigen Mineralgussteil 32 verankert sind (vergleiche Figur 8). Bei den Platten 52 handelt es sich um Adapterplatten, die auf die Oberseite des vertikalen Stützabschnitts 36a beziehungsweise 36b einer Stütze 34a beziehungsweise 34b aufgelegt sind, und bei den Platten 54 um Fundamentplatten 54 auf der Unterseite der beiden vertikalen Stützabschnitte 36a und 36b.

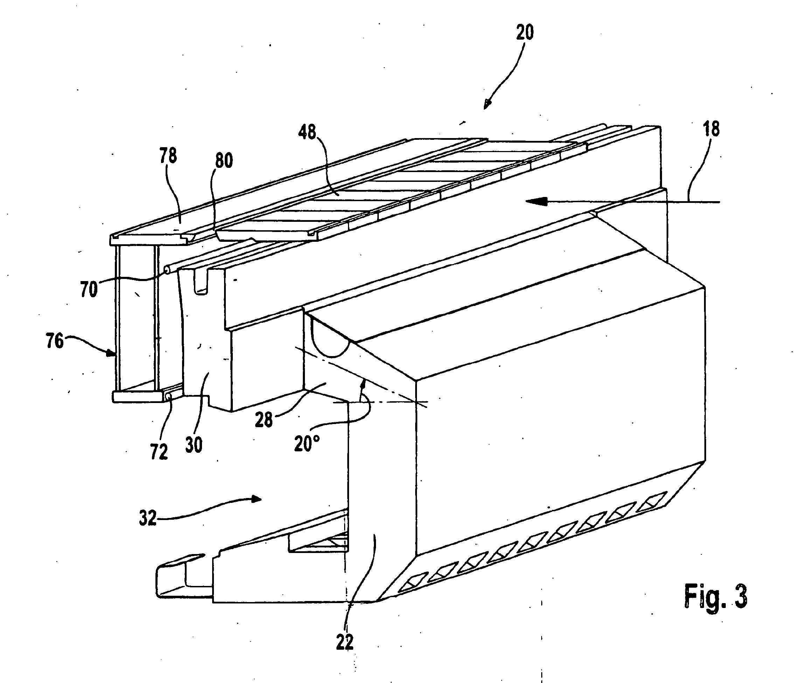

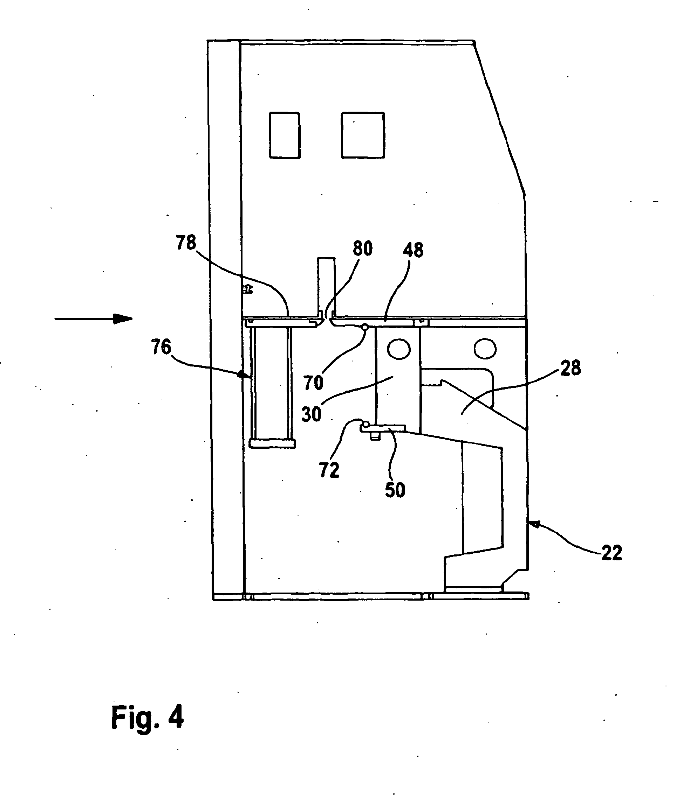

Insbesondere aus Figur 9 ist ersichtlich, dass in den einander zugewandten Seiten der abragenden Bereiche der oberen Führungsplatten beziehungsweise der unteren Führungsplatten 50 jeweils eine sich quer zur Zuführrichtung 18 erstreckende prismatische Ausnehmung 66 beziehungsweise 68 vorhanden ist, in die jeweils eine Führungswelle 70 beziehungsweise 72 für den Sägewagen 12 eingelegt beziehungsweise befestigt ist (siehe Figuren 3 und 4). Bei den beiden Führungswellen 70 und 72 handelt es sich um runde Schienen, zwischen denen die Führungs- beziehungsweise Antriebsräder (nicht dargestellt) des Sägewagens 12 angeordnet sind. Die Führungswellen 70 und 72 bilden also die eigentlichen Schnittstellen der Trageinrichtung 20 zum Sägewagen 12. Die Führungswellen 70 und 72 sind, ebenso wie die Führungsplatten 48 und 50, aus Metall hergestellt.

Die oberen Führungsplatten 48 weisen ferner an ihrem entgegen der Zuführrichtung 18 zeigenden Rand auf der Oberseite eine quer zur Zuführrichtung 18 verlaufende Nut 74 auf. In diese kann ein entsprechend komplementär ausgeformter Steg (nicht dargestellt) am Zuführtisch 16 eingreifen, wodurch dieser präzise an und auf den oberen Führungsplatten 48 festgelegt ist.

Aus den Figuren 1 - 4 ist auch ersichtlich, dass der Trageinrichtung 20 unmittelbar benachbart, von der Trageinrichtung 20 aus gesehen, auf der anderen Seite des Sägewagens 12, eine Stahlkastenkonstruktion 76 angeordnet ist, die eine obere Deckelplatte 78 trägt. Diese ragt horizontal entgegen der Zuführrichtung 18 über die Stahlkastenkonstruktion 76 hinaus zu den oberen Führungsplatten 48 der Trageinrichtung 20 hin (anstelle der Stahlkastenkonstruktion könnte bei einer nicht gezeigten Ausführungsform auch eine Mineralgusskonstruktion Verwendung finden). Die oberen Führungsplatten 48 und die obere Deckelplatte 78 sind auf gleicher Höhe angeordnet. Zwischen ihnen ist ein Spalt 80 gebildet, der auch als Sägespalt bezeichnet wird (vergleiche Figur 4) und durch den bei einem Sägevorgang die Aufteilsäge 14 beziehungsweise deren Sägeblätter (vergleiche Figur 2) der Aufteilsäge 14 hindurchtreten kann.

## Patentansprüche

1. Aufteilanlage (10) für plattenförmige Werkstücke, mit einer Aufteilsäge (14) und mit einer sich quer zu einer Zuführrichtung (18) erstreckenden Trageinrichtung (20), an der eine Führung (70, 72) für einen verfahrbaren Sägewagen (12) der Aufteilsäge (14) angeordnet ist, **dadurch gekennzeichnet, dass** die Trageinrichtung (20) mindestens bereichsweise aus Mineralguss hergestellt ist, wobei in mindestens einem aus Mineralguss hergestellten Bereich (32) mindestens ein Kanal (42, 44) für ein Fluid oder eine elektrische Leitung eingegossen ist und dass die Trageinrichtung (20) eine sich quer zur Zuführrichtung (18) erstreckende, im Wesentlichen vertikale und bodenseitige Ständerwand (22), einen von dieser in oder entgegen der Zuführrichtung (18) auskragenden Verbindungsabschnitt (28), und einen sich von diesem insgesamt vertikal erstreckenden Führungsabschnitt (30) umfasst, wobei Ständerwand (22), Verbindungsabschnitt (28) und Führungsabschnitt (30) ein einstückiges Mineralgussteil (32) bilden.

2. Aufteilanlage (10) nach Anspruch 1, **dadurch gekennzeichnet, dass** die Ständerwand (22) eine Mehrzahl vertikaler Versteifungselemente (24) umfasst.

3. Aufteilanlage (10) nach einem der Ansprüche 1 oder 2, **dadurch gekennzeichnet, dass** die Trageinrichtung (20) zwei seitliche Stützen (34) aufweist, die mit der Ständerwand (22), dem Verbindungsabschnitt (28) und dem Führungsabschnitt (30) ein einstückiges Mineralgussteil (32) bilden.

4. Aufteilanlage (10) nach Anspruch 3, **dadurch gekennzeichnet, dass** die Stützen (34) jeweils einen Auslegerabschnitt (38) zur Stützung des Führungsabschnitts (30) aufweisen.

5. Aufteilanlage (10) nach einem der vorhergehenden Ansprüche, **dadurch gekennzeichnet, dass** in mindestens einen mit Mineralguss hergestellten Bereich (32) mindestens ein Druckkessel (44) für ein Druckfluid eingegossen ist.

6. Aufteilanlage (10) nach einem der vorhergehenden Ansprüche, **dadurch gekennzeichnet, dass** der Kanal (42) durch ein Rohrelement gebildet wird, welches von Mineralguss umgeben ist.

7. Aufteilanlage (10) nach einem der vorhergehenden Ansprüche, **dadurch gekennzeichnet, dass** sie mindestens einen zentralen Druckluftanschluss (46) aufweist, der mit im Mineralguss angeordneten Kanälen (42, 44) und Verteilern verbunden ist.

8. Aufteilanlage (10) nach einem der vorhergehenden Ansprüche, **dadurch gekennzeichnet, dass** in mindestens einen mit Mineralguss hergestellten Bereich (32) ein nach Herstellung des Mineralgussbereichs (32) spanend bearbeitetes Metallteil (48 - 54) eingegossen ist.

9. Aufteilanlage (10) nach Anspruch 8, **dadurch gekennzeichnet, dass** das Metallteil (48 - 54) mittels mindestens eines Ankerelements im Mineralgussbereich (32) verankert ist.

10. Aufteilanlage (10) nach einem der Ansprüche 8 oder 9, **dadurch gekennzeichnet, dass** in den Führungsabschnitt (30) mindestens eine obere (48) und mindestens eine untere Führungsplatte (50) eingegossen sind, die seitlich vom Führungsabschnitt (30) abragen und jeweils eine sich quer zur Zuführrichtung (18) erstreckende Ausnehmung (66, 68) aufweisen, in denen jeweils ein Führungselement (70, 72) für den Sägewagen (12) angeordnet ist.

11. Aufteilanlage (10) nach einem der Ansprüche 8 bis 10, **dadurch gekennzeichnet, dass** ein Metallteil (48) eine Nut (74) zum Einhängen eines Luftkissentisches aufweist.

## Claims

1. A cutting machine (10) for plate-shaped work pieces, having a dividing saw (14) and a carrying device (20), which extends transverse to a feed direction (18) and on which a guide (70, 72) for a movable saw carriage (12) of the dividing saw (14) is arranged, wherein the carrying device (20) is made at least in part of mineral cast, whereby in at least one area (32) that is made of mineral cast at least one channel (42, 44) is molded for a fluid or an electrical line, and the carrying device (20) includes a bottom-standing partition wall (22) that is essentially vertical and that extends transverse to the feed direction (18), a connecting segment (28) that is overhung by the partition wall in or opposite the feed direction (18), and a guide segment (30) that overall extends vertically from the connecting segment, whereby the partition wall (22), the connecting segment (20), and the guide segment (30) constitute an integral mineral-cast part (32).

2. The cutting machine (10) as recited in Claim 1, wherein the partition wall (22) has a multiplicity of vertical reinforcing elements (24).

3. The cutting machine (10) as recited in any of Claims 1 or 2, wherein the carrying device (20) has two lateral support pieces (34), which along with the partition wall (22), the connecting segment (28), and the guide segment (30) constitute an integral mineral-cast part (32).

4. The cutting machine (10) as recited in Claim 3, wherein the support pieces (34) each have a cantilever segment (38) for supporting the guide segment (30).

5. The cutting machine (10) as recited in any of the preceding claims, wherein a pressure vessel (44) for a pressurized fluid is molded into at least one area (32) that is made of mineral cast.

6. The cutting machine (10) as recited in any of the preceding claims, wherein the channel (42) is formed by a tube element, which is surrounded by mineral cast.

7. The cutting machine (10) as recited in any of the preceding claims, wherein it has at least one central compressed-air supply (46), which is connected to channels (42, 44), which are arranged in the mineral cast, and to distributors.

8. The cutting machine (10) as recited in any of the preceding claims, wherein a metal part (48-54), which is produced by milling after the manufacture of the mineral cast area (32), is molded into at least one area (32) that is made of mineral cast.

9. The cutting machine (10) as recited in Claim 8, wherein the metal part (48-54) is anchored in the material cast area (32) by at least one anchor element.

10. The cutting machine (10) as recited in any of Claims 8 or 9, wherein at least one upper (48) and at least one lower guide plate (50) are molded into the guide segment (30), said guide plates protruding laterally from the guide segment (30) and each having a recess (66, 68) that extends transverse to the feed direction (18), within which a guide element (70, 72) is arranged for the saw carriage (12).

11. The cutting machine (10) as recited in any of Claims 8 to 10, wherein a metal part (48) has a groove (74) for mounting an air-cushion table.

## Revendications

1. Installation de découpe (10) pour des pièces en forme de panneaux, comportant une scie de découpe (14) et un dispositif de support (20), qui s'étend transversalement à une direction d'acheminement (18) et sur lequel est agencé un guidage (70, 72) pour un chariot (12) mobile de la scie de découpe (14), **caractérisée en ce que** le dispositif de support (20) est réalisé au moins par zones dans une fonte minérale, au moins un canal (42, 44) pour un fluide ou une ligne électrique étant scellé dans au moins une partie (32) réalisée en fonte minérale, et **en ce que** le dispositif de support (20) comprend une paroi en forme de montants (22) sensiblement verticale et du côté du fond, laquelle s'étend transversalement à la direction d'acheminement (18), une partie de jonction (28) en porte-à-faux, partant de ladite paroi dans la direction d'acheminement (18) ou dans le sens opposé à celle-ci, et une partie de guidage (30) qui s'étend dans l'ensemble verticalement à partir de ladite partie de jonction, la paroi en forme de montants (22), la partie de jonction (28) et la partie de guidage (30) formant une partie en fonte minérale (32) monobloc.

2. Installation de découpe (10) selon la revendication 1, **caractérisée en ce que** la paroi en forme de montants (22) comprend une pluralité d'éléments de rigidification (24) verticaux.

3. Installation de découpe (10) selon la revendication 1 ou 2, **caractérisée en ce que** le dispositif de support (20) comporte deux piliers (34) latéraux qui, conjointement avec la paroi en forme de montants (22), la partie de jonction (28) et la partie de guidage (30), forment une partie en fonte minérale (32) monobloc.

4. Installation de découpe (10) selon la revendication 3, **caractérisée en ce que** les piliers (34) comportent chacun une partie en porte-à-faux (38) pour soutenir la partie de guidage (30).

5. Installation de découpe (10) selon l'une quelconque des revendications précédentes, **caractérisée en ce que** dans au moins une partie (32) réalisée en fonte minérale est scellé au moins un réservoir de pression (44) pour un fluide sous pression.

6. Installation de découpe (10) selon l'une quelconque des revendications précédentes, **caractérisée en ce que** le canal (42) est formé par un élément tubulaire qui est entouré de fonte minérale.

7. Installation de découpe (10) selon l'une quelconque des revendications précédentes, **caractérisée en ce qu'**elle comporte au moins un raccord d'air comprimé (46) central qui est relié à des canaux (42, 44) et des distributeurs agencés dans la fonte minérale.

8. Installation de découpe (10) selon l'une quelconque des revendications précédentes, **caractérisée en ce que** dans au moins une partie (32) réalisée en fonte minérale est scellée une partie métallique (48 - 54), usinée par enlèvement de copeaux après la réalisation de la partie en fonte minérale (32).

9. Installation de découpe (10) selon la revendication 8, **caractérisée en ce que** la partie métallique (48 - 54) est ancrée dans la partie en fonte minérale (32) au moyen d'un élément d'ancrage.

10. Installation de découpe (10) selon la revendication 8 ou 9, **caractérisée en ce que** dans la partie de guidage (30) sont scellées au moins une plaque de guidage supérieure (48) et au moins une plaque de guidage inférieure (50), qui s'avancent en saillie latéralement à partir de la partie de guidage (30) et comportent chacune un évidement (66, 68), qui s'étend transversalement à la direction d'acheminement (18) et dans chacune desquelles est agencé un élément de guidage (70, 72) pour le chariot de scie (12).

11. Installation de découpe (10) selon l'une quelconque des revendications 8 à 10, **caractérisée en ce qu'**une partie métallique (48) comporte une rainure (74) pour l'accrochage d'une table à coussin d'air.
